# EUROPEAN PATENT SPECIFICATION

(11) **EP 1 132 738 B1**
(45) Date of publication and mention of the grant of the patent: **05.05.2010**
(21) Application number: 01105606.6
(22) Date of filing: 06.03.2001
(51) Int. Cl.: G01N 30/74, G01N 21/47

(54) **Evaporative light scattering device**
Verdampfungs-Lichtstreu-Detektor
Détecteur de diffusion de la lumière avec évaporation

(30) Priority: 10.03.2000 US 523108
(43) Date of publication of application: 12.09.2001
(73) Proprietor: Alltech Associates, Inc., Deerfield, IL 60015 (US)
(72) Inventor: Benedict, Bart C., Arlington Heights, Illinois 60004 (US)
(74) Representative: Grünecker, Kinkeldey, Stockmair & Schwanhäusser Anwaltssozietät

(56) References cited:
- WO-A-99/14556
- HENRY C: "IN THE SPRAY WITH ELSDS. EVAPORATIVE LIGHT SCATTERING FILLS IN THE GAPS LEFT BY OTHER CHROMATOGRAPHIC DETECTORS" ANALYTICAL CHEMISTRY,US,AMERICAN CHEMICAL SOCIETY. COLUMBUS, vol. 69, no. 17, 1 September 1997 (1997-09-01), pages 561A-563A, XP000720845 ISSN: 0003-2700

## Description

### BACKGROUND OF THE INVENTION

Evaporative light scattering detection is a method of detecting samples that have been previously separated in various chromatography methods such as, for example, High Performance Liquid Chromatography (HPLC), Gel-Permeation Chromatography (GPC), High Performance Centrifugal Partition Chromatography (HPCPC), Field Flow Fractionation (FFF), and Supercritical Fluid Chromatography (SFC). Evaporative light scattering detection is preferably used when the sample components (e.g., components to be detected) have lower volatility than the mobile phase. A wide variety of sample types can be detected in evaporative light scattering detection. Such sample types include, for example, lipids, triglycerides, surfactants, polymers, underivatized fatty and amino acids, carbohydrates and pharmaceuticals.

Generally, evaporative light scattering detection involves four main steps: 1) nebulization of the chromatography effluent, (which consists of the mobile phase and the sample), into an aerosol of particles, 2) evaporation of the mobile phase, 3) directing a light beam at the dry sample particles to scatter the light, and 4) detection of the scattered light. The amount of sample is determined based upon on how much light is scattered. There are two principal types of devices used in evaporative light scattering detection known in the art. In the first type (the "single flow" design), the nebulized chromatography effluent is immediately introduced into a heated drift tube where the mobile phase is evaporated. The sample particles are then flowed from the heated drift tube to an optical cell where light scattering and detection occurs. One such example of this type of device (the Alltech Model 500 ELSD) is sold by the assignee of this application, ALLTECH ASSOCIATES, INC.

In the second type of device, (the "split-flow" design), the nebulized chromatography effluent is first flowed through a nebulization chamber before entering the heated drift tube. In the nebulization chamber, the nebulized chromatography effluent is split, namely, the larger droplets are eliminated by condensation/impaction on the walls of the nebulization chamber. This condensate is drained to waste. Only the smaller nebulized droplets are subsequently flowed to the heated drift tube where the mobile phase (which is now free of the larger droplets) is more easily evaporated. Thereafter, the sample particles are flowed to the optical cell for light scattering and detection. Devices of this design type are available from, for example, POLYMER LABORATORIES, SEDERE or EUROPSEP INSTRUMENTS.

The above-described design types have particular advantages depending on the mobile phase and the sample type. The single flow design is preferred for use in applications involving the detection of relatively non-volatile samples in relatively volatile organic mobile phases. Moreover, because the entire sample enters the optical cell in this design, response and sensitivity is maximized.

However, the single flow design is not especially preferred when detecting relatively volatile samples in relatively non-volatile mobile phases (such as aqueous mobile phases). Highly aqueous mobile phases generally require higher evaporation temperatures. If the sample is volatile at these higher evaporation temperatures, sample loss is incurred during the evaporation step resulting in poorer sensitivity. By using the split-flow design (i.e., passing the chromatography effluent through a nebulization chamber to remove the larger droplets of mobile phase prior to the heated drift tube), the evaporation temperature of the mobile phase can be reduced. Thus, the mobile phase may be evaporated at a lower temperature in the drift tube, which leads to less sample loss from evaporation. In other words, by removing the larger droplets, a smaller and more uniform particle size distribution is achieved in the mobile phase, which enables evaporation of the mobile phase at lower evaporation temperatures.

However, for relatively non-volatile sample types in relatively volatile organic mobile phases, the split-flow design is generally less preferred because (1) loss of the relatively non-volatile sample during evaporation at lower temperatures of the relatively volatile mobile phase is not a concern (2) the relatively non-volatile sample may be lost during the splitting of the chromatography effluent in the nebulization chamber. Another problem with devices of the split-flow design is that the split ratio of the sample (i.e., the amount that goes to waste versus the amount that is ultimately detected) is affected by, among other things, the laboratory temperature. In other words, fluctuations in laboratory temperatures may lead to fluctuations in droplet size in the nebulized chromatography effluent. Thus, as ambient and/or laboratory temperatures fluctuate, the split ratio and corresponding reproducibility of sample detection may vary from run to run.

As is evident from the above-discussion, depending on the mobile phase and the sample type being detected, one evaporative light scattering detection design and method is advantageous over the other. However, laboratories often work with both aqueous and organic mobile phases and various sample types with different volatilities. Ideally, laboratories would have available both design types for evaporative light scattering detection. However, in order to have this benefit, the laboratory would need to purchase two separate devices, which can be expensive. It would be advantageous and constitute an improvement in the art if an evaporative light scattering detection device and system were developed which could be quickly and inexpensively converted between the single flow and split flow configuration.

To address this need, Applicants previously developed a device and system for easy and quick conversion between the single flow and the split flow configuration. That system and design is disclosed in Patent WO 99/14556 which is assigned to the assignee of this which is assigned to the assignee of this application. Although the system and device disclosed in this co-pending application fulfills the above need, a disadvantage associated with that system and device is that the nebulizer must be removed, a flow splitting adaptor installed and the nebulizer replaced when converting from the single flow to the split flow configuration. The present invention avoids the need of removing the nebulizer and inserting a flow splitting adaptor when converting from the single flow to the split flow configuration.

### BACKGROUND ART

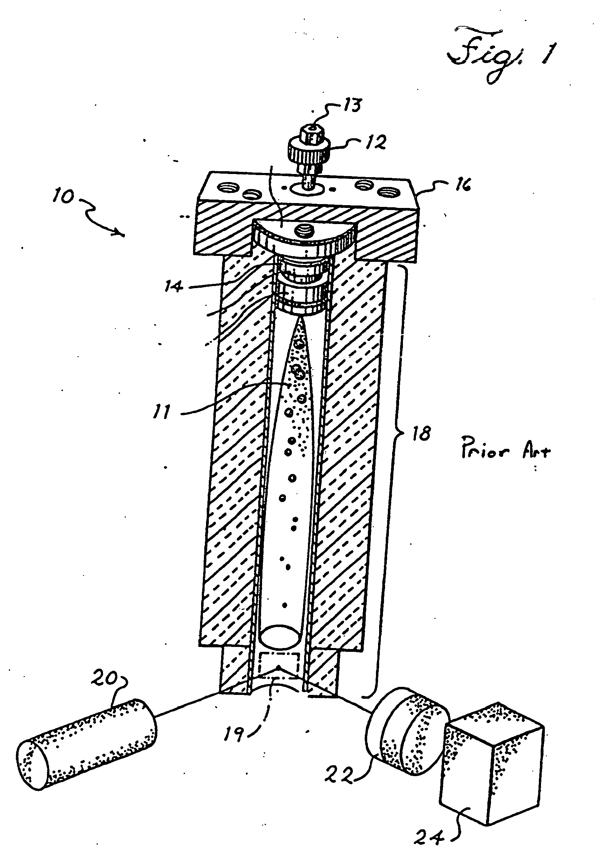

Fig 1 illustrates an evaporative light scattering detection device of the single flow configuration. Fig. 1 provides an overview of the principal of operation of an evaporative light scattering detection device 10. The evaporative light scattering device 10 has a connector 12. The connector 12 provides a fluid connection between the chromatography column (not shown) and the evaporative light scattering device 10. The connector 12 is preferably made from stainless steel and is threadingly engaged to nebulizer bracket 16. Chromatography effluent is flowed into the evaporative light scattering device 10 through channel 13 in connector 12. Nebulizer bracket 16 removably attaches nebulizer 14 to drift tube assembly 18. The nebulizer 14 contains a nebulizer needle (not shown). The drift tube assembly 18 surrounds a central heated drift tube channel 11. Finally, a laser light source 20, a photodetector 22 and amplifier 24 are provided.

In operation, and with reference to Fig. 1, the chromatography effluent is flowed through connector 12 to nebulizer 14. The chromatography effluent is directed through the nebulizer needle (not shown). Upon exiting the nebulizer needle, the chromatography effluent is impacted by nebulizer gas to form an aerosol of droplets, preferably of generally uniform size. The nebulizing gas may Include any gas that is Inert to the sample such as helium, carbon dioxide, air or nitrogen, and is preferably nitrogen.

The nebulized chromatography effluent is then flowed through channel 11 in the drift tube assembly 18. In channel 11, the mobile phase is evaporated leaving behind the relatively non-volatile sample particles. The sample particles are flowed through channel 11 to the light scattering zone 19 for detection. A light source 20 emits light, which the sample particles scatter. The scattered light Is then detected at the photodetector 22. The photodetector 22 then produces a signal, which Is sent to an amplifier 24 though analog outputs In the photodetector.

The light source 20 Is preferably a Class IIIA laser product with 650 nm laser diode, 5mW maximum power, collimating optics, and polarized. A preferred laser light source is available from COHERENT, as part no. VLM3-5L. The photodetector 22 is preferably made from a silicon photodiode. A preferred photodetector 22 Is available from HAMAMATSU, as part no. S2386-8K. The photodetector 22 is preferably located at a 90-degree angle from the light source 20. A light trap (not shown) is also preferably located at a 180-degree angle from the light source 20 to collect any light not scattered by the sample particles In the aerosol stream. After detection in the detection zone, the sample particles are flowed to waste. Preferably the exhaust is flowed to a fumed hood or other ventilation device located close to the detector to remove the detector exhaust from the laboratory.

in operation, the nitrogen nebulizing gas is preferably regulated from 310-552 kPa (Gauge) (45-80 psig) with 99.9% purity or better. A stable gas flowrate and pressure are necessary for reproducible results. The gas is preferably free of contaminants, such as oil, water, particulate or any other non-volatile substances. The droplet size in the nebulized chromatography effluent may be regulated by varying the flow rate of either the chromatography effluent and/or the nebulizing gas. The lower the flow rate of the chromatography effluent, the less gas and heat necessary for nebulization and subsequent evaporation

### SUMMARY OF THE INVENTION

A device for evaporative light scattering detection wherein a sample to be detected is flowed through the device, the device comprising a nebuliser, a drift tube in flow communication with the nebulizer, the drift tube positioned downstream in the direction of flow from the nebuliser, a light source positioned downstream of the drift tube, and a detector to detect the sample by evaporative light scattering, the detector characterized by a retractable impactor for easy conversion between a single flow configuration and a split flow configuration positioned in the drift tube, and the drift tube further comprising a drain outlet.

### DESCRIPTION OF THE DRAWINGS

Fig. 1 is a schematic diagram illustrating the principles of operation of an evaporative light scattering detection device.
Fig. 2 is a perspective view of a preferred embodiment of the device of the present invention.
Fig. 3 is a cross-section along line A-A of figure 2 with the retractable impactor in the parallel mode.
Fig. 4 is a cross-section along line A-A of figure 2 with the retractable in the perpendicular mode.
Fig. 5 is an end perspective view of the retractable impactor.
Fig. 6 is a top plan view of the retractable impactor.

### Detailed Description of the Preferred Embodiments

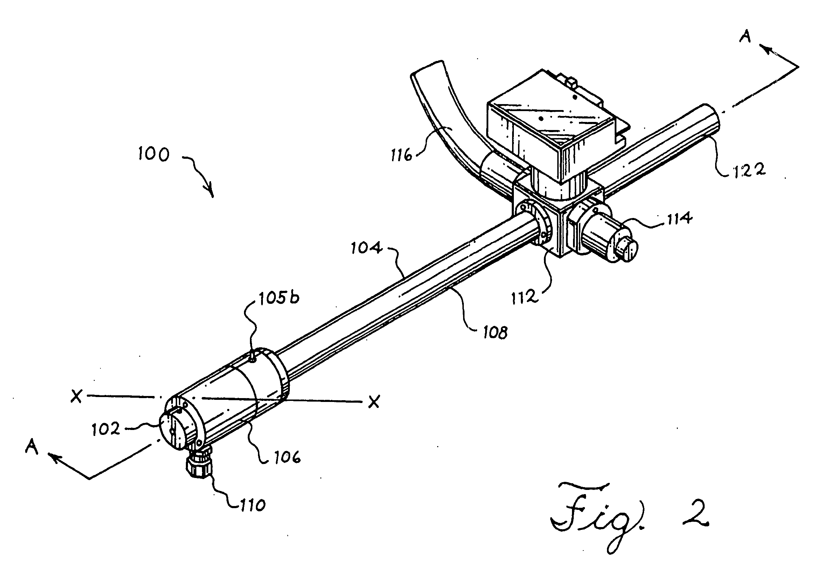

With reference to Figure 2, a preferred embodiment of the evaporative light scattering device 100 of the present invention is illustrated. The device comprises a nebulizer 102. The nebulizer is preferably as disclosed in co-pending application serial no. 08/932,262 and is available from ALL TECH ASSOCIATES, part no. 600514. Downstream in the direction of flow from the nebulizer is a tube 104. The drift tube may preferably be constructed as set forth in co-pending application serial no. 08/932,262. The drift tube has two sections, a nebulizer block 106 and a mid-section 108. The nebulizer block 106 connects the nebulizer 102 to the drift tube. The nebulizer 102 is in flow communication with the drift tube 104. The drift tube 104 further has a drain outlet 110, which is preferably located on the nebulizer block 106. The drift tube also has a retractable impactor 105, which is also preferably located on the nebulizer block 106. The impactor 105 preferably comprises a planar, solid section 105a mounted on a pin 105b. By retractable, it is meant that the planar section 105a may be rotated from a position where the face of the planar section is parallel to the direction of fluid flow (parallel mode) to a position in which the face of the planar section is at a 90 degree angle to the path of flow (perpendicular mode) through the drift tube 104. When in the perpendicular mode, the planar section provides an impact surface for the nebulized mobile phase particles to strike, which leads to condensation of those particles. By directing the mobile phase against the impactor in this fashion, a portion of the mobile phase undergoes condensation and is separated from the nebulized sample particles. Moreover, because the drift tube is positioned at an angle such that the drain outlet is below the impactor relative a plane X-X through the device between the impactor and the drain outlet, condensed mobile phase is removed from the device by gravity through the drain outlet 110.

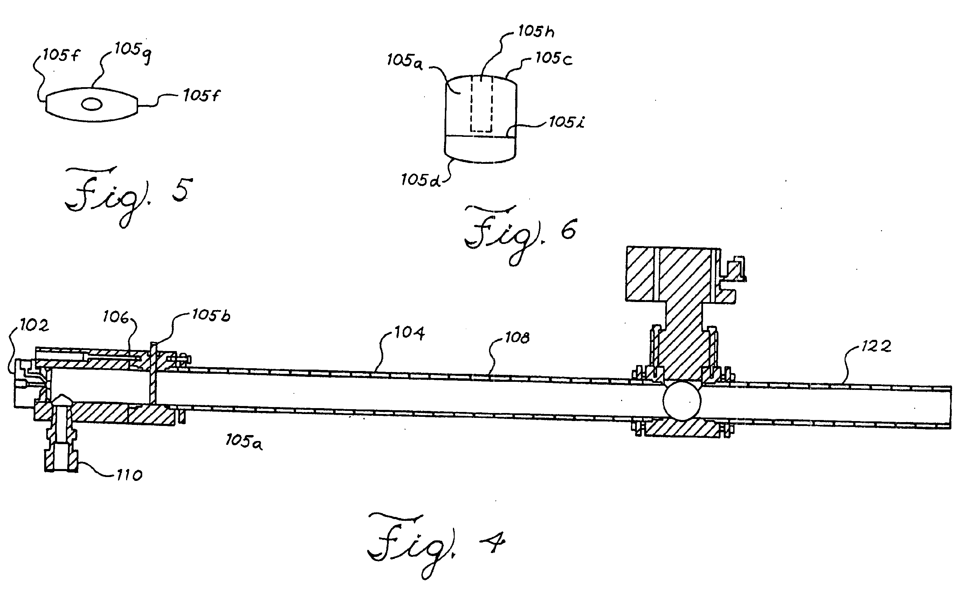

Preferably, the planar section 105a is tapered (see Fig. 4) and is constructed from TEFLON coated stainless steel. The outer edges of the planar section 105 c and generally correspond to the contour of the inner wall 104a of the drift tube. The impactor pin is preferably constructed from stainless steel. In the perpendicular mode, the impactor preferably blocks about 70% of the flow path in the plane through the drift tube in which the impactor planar section 105a resides. In the parallel mode, the impactor preferably blocks about 18% of the flow path in the plane through the drift tube in which the impactor planar section 105a resides. However, because the impactor is preferably tapered (see Figure 5), most of the mobile phase and sample will flow past the impactor when it is in its parallel mode. The impactor is preferably rotated between the parallel and perpendicular modes by a motor (not shown), such as a direct drive solenoid motor. However, the impactor may be rotated manually if desired. Also, rotation of the impactor may be programmed by the user and driven by logic.

Alternatively, the device may be constructed such that the impactor is inserted and retracted from the fluid flow channel instead of rotated between the perpendicular and parallel modes as described above. Thus, the impactor may be inserted into the flow channel of the drift tube and positioned in the perpendicular mode and removed from the flow channel all together by appropriate means. The term "retractable" is meant to include the above described impactor that may be rotated between the perpendicular and parallel modes as well as to an impactor that may be inserted into the flow channel and positioned in the perpendicular mode and removed from the flow channel all together.

Additionally, the shape of the impactor may be varied. The only critical aspect of the impactor is that it provide a sufficient impact surface for the nebulized mobile phase when the device is in the split flow configuration and that this impact surface may be easily removed from the path of flow for converting to the single flow configuration.

With further reference to Figures 2-4, the drift tube 104 is in flow communication with an optics block 112. The optics block comprises a light source 114, which is preferably a laser available from COHERENT as part VLMIII-5L, and a light trap 116. The light trap is preferably an insulated block of black anodized aluminum of suitable curvature to funnel light to its end. The device further comprises a detector 118, which comprises a photo diode and amplifier available from ELECTRO-OPTICAL SYSTEMS as part no. S-050-E8. The drift tube 104 and optics block 112 are in flow communication with an exhaust tube 122.

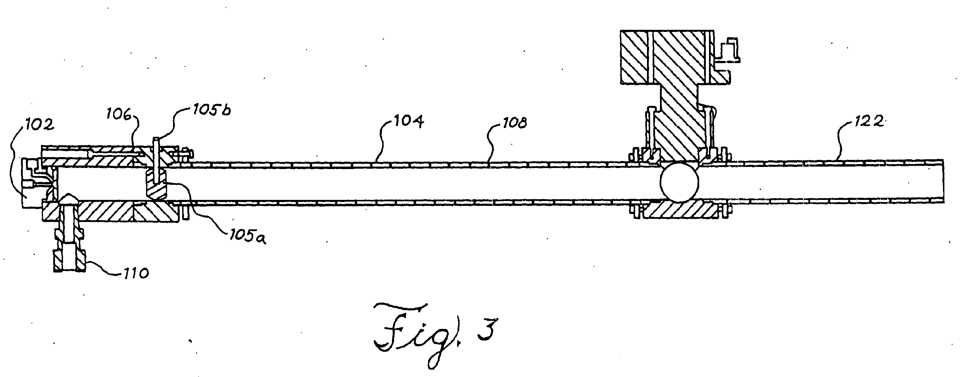

In the single flow configuration, the impactor 105 is in the parallel mode (Fig 3). The sample and mobile phase are introduced into the nebulizer 102 where the sample and mobile phase are nebulized. The sample and mobile phase particles are then flowed to the drift tube where the mobile phase is evaporated. The sample particles are then flowed to the optics block where the sample particles are detected. The sample particles are then flowed to the exhaust tube 122 and then to waste.

The device may be quickly and easily converted to the split flow configuration by placing the impactor in the perpendicular mode (Fig. 4). In this mode, sample and mobile phase are nebulized in the nebulizer. The nebulized sample and mobile phase strike the planar section 105a of the impactor, which removes a portion of the nebulized mobile phase (and possible a portion of the sample) from the flow stream by condensation. This condensate is flowed out of the drift tube through drain outlet 110. The remaining portion of the sample and mobile phase is flowed through the drift tube where the mobile phase is evaporated. The sample particles are then flowed to the optics block where the sample is detected.

In a preferred aspect of the invention, the device has four zones in which the temperature is controlled independently of the other zones. Thus, the first zone is located between the nebulizer 102 and the impactor 105. The second zone is located between the impactor 105 and the optics block 112. The third zone is the optics block 112. The fourth zone is the exhaust tube. The zones are heated by using heat tape embedded in the nebulizer block, drift tube, optics block and the exhaust tube as well known in the art. Moreover, each of these zones is connected to their own power source for independent temperature control. As those skilled in the art will appreciate, optimum temperature conditions for the particular sample and mobile phase are more easily achieved by dividing the device into four temperature zones.

According to a most preferred embodiment of the present invention, the evaporative light scattering device may have the following dimensions. The distance between the tip of the nebulizer needle to the end of the exhaust tube 122 is 600,13 mm (23,627 inches). The distance from the tip of the nebulizer needle to the impactor 105 is 68,89 mm (2,594 inches). The nebulizer block 106 is 90,78 mm (3,574 inches) in length. The mid-section of the drift tube 104 is about 330,2 mm (13 inches) in length. The length of the exhaust tube is 10,19 mm (4,388 inches). The internal diameter of the drift tube 104 is about 22,10 mm (0,87 inches). The impactor 105 preferably has the following dimensions. With reference to Figs. 5 and 6, edges 105f are about 0,40 mm (0,016 inches) in length. The impactor has a thickness of about 2,31 mm (0,091 inches) along line 105g. Bore 105h has an internal diameter of about 71,01 mm (0,276 inches) for receiving mounting needle 105b. The impactor 105 further has a width of about 14,02 mm (0,552 inches) along line 105i.

As those skilled in the art will appreciate, modifications may be made to the foregoing embodiments without departing from the invention, which is defined by the following claims.

## Claims

1. A device (100) for evaporative light scattering detection wherein a sample to be detected is flowed through the device, the device comprising:
a nebulizer (102);
a drift tube (104) in flow communication with the nebulizer (102), the drift tube (104) positioned downstream in the direction of flow from the nebulizer (102);
and an optics block (112) positioned downstream in the direction of flow from the drift tube (104), wherein the optics block (112) comprises a light source (114); and
a detector to detect the sample by evaporative light scattering;
**characterized by**
a retractable impactor (105) for easy conversion between a single flow configuration and a split flow configuration positioned in the drift tube (104), and the drift tube (104) further comprising a drain outlet (110).

2. The device (100) of claim 1, wherein the retractable impactor (105) comprises a planar section (105a) mounted on a pin (105b) which has a perpendicular mode, where the face of said planar section (105b) is at 90° degrees angle to the path of flow, and a parallel mode where the face of said planar section (105b) is parallel to the direction of the fluid flow, and is convertable between these two modes by rotation of the retractable impactor (105).

3. The device of claim 1 or 2, wherein the drift tube (104) comprises a nebulizer block (106) and a mid-section (108) for evaporating the mobile phase, the nebulizer block (106) connecting the nebulizer (102) to the mid-section (108) of the drift tube (104), the nebulizer block (106) comprising the drain outlet (110) and the retractable impactor (105).

4. The device (100) of claim 3 further comprising an exhaust tube (122) positioned downstream in the direction of flow from the optics block (112).

5. The device (100) of claim 4, wherein the device (100) has four temperature zones in which the temperature can be independently controlled, the first zone located between the nebulizer (102) and the retractable impactor (105), the second zone positioned between the retractable impactor (105) and said optics block (112), the third zone located at said optics block (112), and the fourth zone positioned in the exhaust tube (122).

6. The device of claim 2 wherein the impactor is rotatable between the parallel mode and the perpendicular mode by a motor.

7. The device of claim 6 further comprising logic for actuating the motor.

## Patentansprüche

1. Vorrichtung (100) zum Erfassen von Verdampfungslichtstreuung, worin eine zu detektierende Probe durch eine Vorrichtung fließt, wobei die Vorrichtung folgendes umfasst:
einen Zerstäuber (102);
eine Driftröhre (104), die in Fliessverbindung mit dem Zerstäuber (102) steht, wobei die Driftröhre (104) flussabwärts in Richtung eines Flusses von dem Zerstäuber (102) angeordnet ist; und
ein Optikblock (112), der stromabwärts in Richtung eines Flusses von der Driftröhre (104) angeordnet ist, worin der Optikblock (112) eine Lichtquelle (114) und einen Detektor zum Erfassen der Probe durch Verdampfungslichtstreuung umfasst;
**gekennzeichnet durch**
einen einklappbaren Stoßkörper (105) zum leichten Umschalten zwischen einer Einzelflusskonfiguration und einer Splittflusskonfiguration, der in der Driftröhre (104) angeordnet ist, und wobei die Driftröhre (104) weiterhin einen Ablaufauslass (110) umfasst.

2. Vorrichtung (100) nach Anspruch 1, worin der einklappbare Stoßkörper (105) einen planaren Bereich (105) umfasst, der auf einen Pin (105b) montiert ist, der eine senkrechte Betriebsweise aufweist, wo die Fläche des planaren Bereichs (105b) in einem 90° Grad Winkel zum Flusspfad steht, und eine parallele Betriebsweise, wo die Fläche des planaren Bereichs (105b) parallel zur Richtung des Fluidflusses steht, und der zwischen diesen beiden Betriebsweisen umschaltbar ist durch Rotation des einklappbaren Stoßkörpers (105).

3. Vorrichtung nach Anspruch 1 oder 2, worin die Driftröhre (104) einen Zerstäuberblock (106) und einen Mittelbereich (108) zum Verdampfen der mobilen Phase umfasst, wobei der Zerstäuberblock (106) den Zerstäuber (102) mit dem Mittenbereich (108) der Driftröhre (104) verbindet, wobei der Zerstäuberblock (106) den Ablaufauslass (110) und den einklappbaren Stoßkörper (105) umfasst.

4. Vorrichtung (100) nach Anspruch 3, die weiterhin eine Abgasröhre (122) umfasst, die stromabwärts in Richtung eines Flusses von dem Optikblock (112) angeordnet ist.

5. Vorrichtung (100) nach Anspruch 4, worin die Vorrichtung (100) vier Temperaturzonen aufweist, in denen die Temperatur unabhängig voneinander gesteuert werden kann, wobei die erste Zone zwischen dem Zerstäuber (102) und dem einklappbaren Stoßkörper (105) liegt, die zweite Zone zwischen dem einklappbaren Stoßkörper (105) und dem Optikblock (112) angeordnet ist, die dritte Zone an dem Optikblock (112) liegt, und die vierte Zone in der Abgasröhre (122) liegt.

6. Vorrichtung nach Anspruch 2, worin der Stoßkörper durch einen Motor rotierbar zwischen der parallelen Betriebsweise und der senkrechten Betriebsweise ist.

7. Vorrichtung nach Anspruch 6, die weiterhin eine Logik zum Betätigen des Motors umfasst.

## Revendications

1. Dispositif (100) pour la détection par diffusion de lumière avec évaporation dans lequel un échantillon à détecter est amené à s'écouler à travers le dispositif, le dispositif comprenant :
un nébuliseur (102) ;
un tube de glissement (104) en communication fluidique avec le nébuliseur (102), le tube de glissement (104) étant positionné en aval du nébuliseur (102) par rapport à la direction d'écoulement ;
et un bloc optique (112) positionné en aval du tube de glissement (104) par rapport à la direction d'écoulement, le bloc optique (112) comprenant une source de lumière (114) ; et
un détecteur pour détecter l'échantillon par diffusion de lumière avec évaporation ;
**caractérisé par**
un impacteur escamotable (105), positionné dans le tube de glissement (104), pour faciliter la conversion entre une configuration d'écoulement simple et une configuration d'écoulement divisé, le tube de glissement (104) comprenant en outre une sortie de drainage (110).

2. Dispositif (100) selon la revendication 1, dans lequel l'impacteur escamotable (105) comprend une partie plane (105a) montée sur un axe (105b), ladite partie plane (105a) présentant un mode perpendiculaire dans lequel sa face forme un angle de 90 degrés avec le trajet d'écoulement, et un mode parallèle dans lequel sa face est parallèle à la direction de l'écoulement de fluide, et pouvant être convertie entre ces deux modes par rotation de l'impacteur escamotable (105).

3. Dispositif selon la revendication 1 ou la revendication 2, dans lequel le tube de glissement (104) comprend un bloc de nébuliseur (106) et une section médiane (108) pour évaporer la phase mobile, le bloc de nébuliseur (106) reliant le nébuliseur (102) à la partie médiane (108) du tube de glissement (104), le bloc de nébuliseur (106) comprenant la sortie de drainage (110) et l'impacteur rétractable (105).

4. Dispositif (100) selon la revendication 3, comprenant en outre un tube d'échappement (122) positionné en aval du bloc optique (112) par rapport à la direction d'écoulement.

5. Dispositif (100) selon la revendication 4, dans lequel le dispositif (100) comprend quatre zones de température dans lesquelles la température peut être régulée de façon indépendante, la première zone étant située entre le nébuliseur (102) et l'impacteur rétractable (105), la seconde zone étant positionnée entre l'impacteur rétractable (105) et ledit bloc optique (112), la troisième zone étant située au niveau dudit bloc optique (112), et la quatrième zone étant positionnée dans le tube d'échappement (122).

6. Dispositif selon la revendication 2, dans lequel l'impacteur est apte à être entraîné en rotation entre le mode parallèle et le mode perpendiculaire à l'aide d'un moteur.

7. Dispositif selon la revendication 6, comprenant en outre une logique servant à actionner le moteur.
